Europäisches Patentamt

(19) European Patent Office

Office européen des brevets

(11) Publication number: **0 056 954**
**B1**

(12) **EUROPEAN PATENT SPECIFICATION**

(45) Date of publication of patent specification: **12.11.86**

(21) Application number: **82100230.0**

(22) Date of filing: **14.01.82**

(51) Int. Cl.⁴: **H 02 P 5/40,** D 03 D 47/34

(54) **Electric control for yarn feeding devices.**

(30) Priority: **26.01.81 IT 1931881**

(43) Date of publication of application:
**04.08.82 Bulletin 82/31**

(45) Publication of the grant of the patent:
**12.11.86 Bulletin 86/46**

(84) Designated Contracting States:
**AT BE CH DE FR GB LI LU NL SE**

(56) References cited:
**DE-A-1 919 716**
**FR-A-2 165 915**
**GB-A-1 035 559**
**US-A-3 796 385**

(73) Proprietor: **ROJ ELECTROTEX S.p.A.**
**Via Vercellone, 5/11**
**I-13051 Biella (Vercelli) (IT)**

(72) Inventor: **Ghiardo, Fiorenzo**
**Via Trossi, 53**
**I-13069 Vigliano Biellese (IT)**

(74) Representative: **Vatti, Paolo, Dr. Ing. et al**
**Fumero - Studio Consulenza Brevetti**
**Widenmayerstrasse 4/I**
**D-8000 München 22 (DE)**

Courier Press, Leamington Spa, England.

## Description

The invention is directed to an electric device for the control of yarn feeding devices for weaving machines according to the preamble of patent claim 1.

It is known that the yarn feeders for weaving machines, particularly weft yarn feeders for weaving looms, are devices meant to draw the weft yarn from the reels or the like, wind a small amount or supply of said yarn onto a yarn storage drum, said yarn being then fed to the yarn picking members which draw it from said supply at a low and constant tension, and said supply being continuously re-formed as the yarn gets drawn, through the discontinuous operation of the winding members.

It is also known that all yarn feeders for weaving machines in use are electrically operated and that the main characteristics required for the electric devices operating said feeders are: possibility to adjust, in a continuous way and to a wide extent, the rotation speed; possibility to dispose of short acceleration and braking times; and possibility to keep the speed constant at the selected value.

There are at present devices for feeding yarn to weaving machines which essentially make use, for winding the yarn supply, of direct current motors or else of frequency change alternate current motors. On the other hand these devices do not have the aforespecified characteristics to a satisfactory extent, whereby it appeared necessary — with the development of the increasingly fine performances required from the feeders — to study devices for the operation of such feeders which would satisfy the present requirements and those of the forthcoming future.

An electric control device of the kind mentioned above, to which the invention is directed, has been described in US—A—3 796 385. In the device described therein there is provided an electric three-phase driving motor supplied with AC voltage, the driving motor neither being phase controlled there not being controllable with regard to its speed. Rather the motor has always the same signal speed, an alternative feed and non-feed position of the motor being achieved by using electronic switching means.

The object of the invention is to allow, in wide range of values, an adjustment of the motor speed of yarn feeding devices whilst it is working, so as to set it at the speed which is most appropriate for the type of working being carried out. The device should be adjustable, as far as motor speeds are concerned, to values which according to the work to be conducted are just required, so that far more regular adjustment of motor speed to yarn drawing by the loom is possible, compared with the abovementioned devices according to the state of the art.

According to the invention the aforementioned object is solved by the features mentioned in the characterizing part of patent claim 1.

Particularly preferred embodiments of the invention are subject of the sub-claims.

In other words the task underlying the invention is solved by a device of the aforementioned kind in which, to change the motor speed, said motor is supplied with AC voltage, phase controlled by triacs in the claimed manner, wherein three signals are used representing a selected speed for the motor, the true speed of the motor itself and, respectively, the presence of the yarn supply on the drum, set signals being compared and processed into an electronic circuit in order to produce signals for operating said triacs, wherein, particularly, the said three signals are compared in a circuit generating a signal which must in turn be compared with three periodic ramp signals having the same phase and a period half those of the three supply voltages of the motor, in order to generate square waves signals energizing the corresponding triacs and each of the said ramp signals is generated by a ramp generating circuit synchronized by a signal sent from a circuit detecting the passage through zero of the corresponding motor supply voltage. Most advantageously, as it is subject of the sub-claims, said signals representing the speeds and the presence of yarn on the drum are compared also in a further electronic circuit which is apt to generate a signal for energizing the supply of a winding apt to brake the motor when the signal indicating the presence of yarn supply takes up the zero value, the energizing of said winding being interrupted when the motor rotation speed is very low.

The fact that the periodic ramps have an appropriate length namely half a period. of the main frequency, for the desired error signal generation being essential for the invention, the expert could not be led by FR—A 2 165 915 to the teaching of the invention since the periodicity there is a multiple of the main voltage period. In DE—A—1 919 716 the adjustment possibility of a motor is described, wherein the motor speed adjustment is achieved by AC with the use of triacs, but with a system that has no further similarities with the claimed electric control device, so that also this publication could not lead the expert to the teaching of the invention in which it is possible to adjust the rotation speed of the yarn feeding device, by adjusting the motor speed, in a particularly wide range of adjustment. Furthermore once the speed has been adjusted, the electric control device of the invention gives the possibility to keep said speeds substantially constant on the selected values throughout the running of the yarn feeding device, which is a novel and very important feature most useful in yarn feeding devices. Whilst with the device according to the invention braking takes place when the motor is at full speed, in GB—A 1 035 559, alien to the field and problems of the invention, there is described a device in which braking takes place in conditions of very reduced power fed to the motor.

The invention will now be described in further detail, by mere way of example, with reference to a preferred embodiment thereof, shown in the accompanying drawings, in which:

Figure 1 is an axial section view of a weft yarn feeding device for weaving looms without shuttles, containing a synthetic block diagram of the electric control device, object of the present invention, operating said weft yarn feeding device;

the device itself;

Figure 2 is a detailed block diagram of the circuit controlling said electric control device, which illustrates the generation of the various signals and their interconnection and appliance;

Figure 3 shows a series of diagrams indicating the course, in function of time, of the main quantities and signals used for the operation of the control device in a steady state;

Figure 4 shows the dynamic course in function of time, of the main quantities and signals acting in the electric control device; and

Figure 5 is a block diagram, similar but less detailed than that of figure 2, relating to a different embodiment of the circuit controlling the electric device according to the invention.

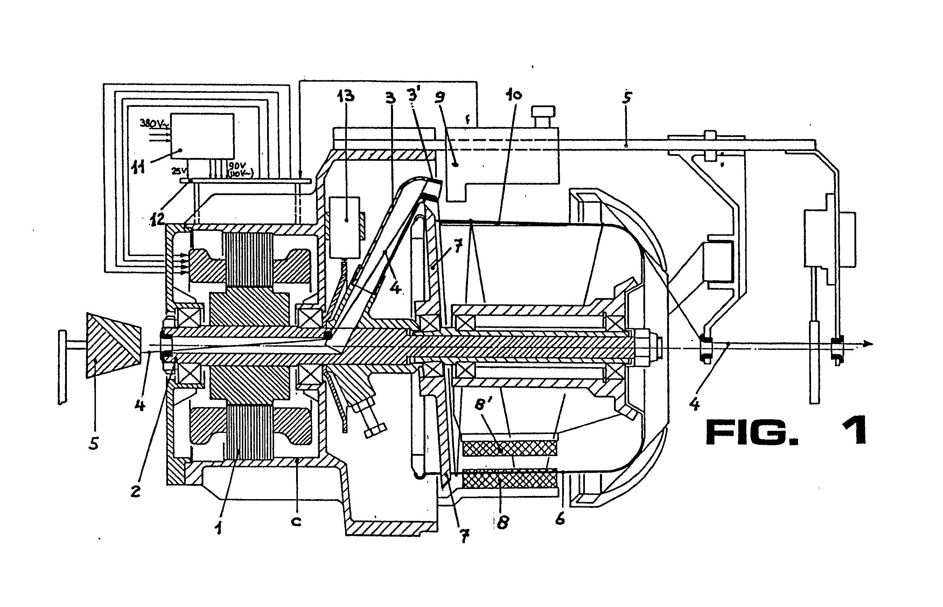

The weft yarn feeding device shown in figure 1 comprises, within a frame or casing C, a three-phase motor 1, the shaft 2 of which is hollow, so as to allow the passage of the yarn to be fed, and carries a transversal tube 3, appropriately bent and curved at its free end towards a thread guide eyelet 3', into which extends the cavity of the shaft. The weft yarn 4 is intermittenty unwound overhead from a reel or spool 5, at an average speed depending on the weaving machine being fed by the device, and in a manner such as to form a yarn "balloon" between the spool 5 and the device itself.

The weft yarn 4 then passes through the hollow shaft 2, the tube 3 and, through rotation of this latter, it is arranged in adjacent turns onto the drum 6, forming thereon a yarn supply.

The drum 6 has a slightly conical shape and each turn, as it is being arranged thereon, gets pushed forward, on the drum itself, by an oscillating disc 7 mounted eccentric on the motor shaft 2 and pushes in turn, towards the right in the drawing, the previously arranged turns.

The drum 6 is itself mounted on the shaft 2 by means of bearings and it is stopped from rotating by the pairs of opposed permanent magnets 8 and 8', one of which is fixed onto the casing C. Thus, when working, the device produces a winding of weft yarn supply formed by close, but not superposed, turns which will then be unwound, starting from the right of said winding, with an extremely reduced friction (and therefore at low and constant tension).

The width of a yarn supply is adjusted by the position of the photoelectric cell 9, slidable for adjustment on the bracket S of the casing C.

Until a reflector 10 provided on the drum 6 is not covered by the yarn, whereby it sends back to the photoelectric cell 9 the beam of light issued therefrom, said cell 9 will produce a constantly "high" signal "f" (i.e. equal to the supply voltage of the control circuit) meaning "yarn missing" and will control therewith the rotation of the motor. When, however, the turns of the yarn winding start to cover the reflector 10, the beam of light will no longer be reflected and the "f" signal produced by the photoelectric cell 9 will drop to zero, stopping the motor 1.

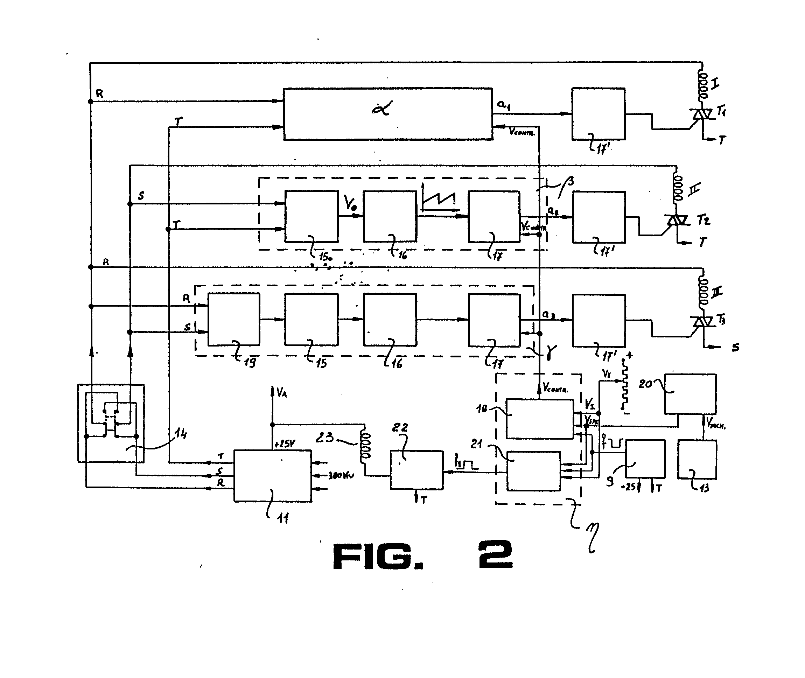

The motor 1, unlike those used in the known yarn feeding devices, is a three-phase motor supplied with AC voltage, phase controlled by triacs. To said motor are associated — as digramatically shown in figure 1 — a power supply 11, an electronic printed control circuit 12 (the block diagram showing the operation of which is illustrated in figure 2) and a speedometer dynamo 13.

The power supply 11 — which is separated from the heretofore described yarn feeding device (of which form instead an integrating part the other components of the electric control device according to the invention) and which may be provided to supply several of these devices, on the same loom — substantially consists of a mains supplied (for instance, at 380 V) three-phase transformer, which disposes of two secondary windings. From the first secondary winding of said transformer, a three-phase voltage is drawn at 90 or 110 V for a mains frequency of 50 or 60 Hz respectively, for the supply of the motor 1 through the control circuit 12, while from the other secondary, a direct voltage, filtered and rectified, is drawn at 25 V, for the supply of the control circuit 12 and of the winding braking the motor 1.

The control circuit 12 (figure 2) is a printed electronic circuit, through which the three-phase voltage RST from the power supply 11, after having crossed a reversing switch 14 (to be used for reversing, when required, the rotation sense of the motor 1), supplies the windings I, II and III of the motor 1, under the control of triacs $T_1$, $T_2$, $T_3$, (acting as switches, in known manner), which are in turn controlled by signals sent from circuits processing the said voltage in accordance to the rotation speed to be imparted on the motor 1.

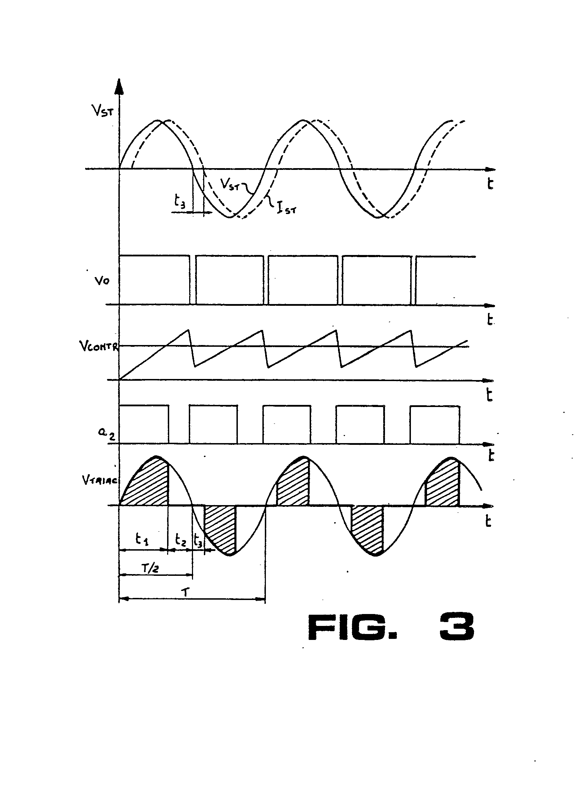

In figure 2, the said voltage processing circuits have been represented in simplified form (as a simple block $\alpha$) for the phase RT, and in more detailed form (but enclosed in the blocks $\beta$ and $\gamma$ in dashed lines) for the phases ST and RS. As seen with reference to the phase ST, these circuits provide, for each phase, a zero detector 15 which generates a signal $V_0$ (figures 2 and 3) with the same phase of the voltage ST, a generator 16 of ramp signals, synchronized on the signal $V_0$, which generates ramps lasting half a period and with the same phase of the corresponding motor supply voltage (represented on the third diagram of figure 3), and a comparator 17, which compares the gemerated ramp signal with a control voltage signal $V_{CONTR}$ sent from a control voltage generator 18. The square wave signal $a_2$ (figures 2 and 3) sent from the comparator 17 controls the energizing of the triac $T_2$ through a starter 17'.

What has been said evidently also applies to the phases RT and RS, with the only difference that, for what concerns the phase RS, it is necessary to precede the zero detector 15 with a decoupler 19.

The control voltage generator 18 receives a selected input voltage $V_i$ (figure 2), which corresponds to the speed programmed for the motor 1, an input signal f generated by the photoelectric cell 9, and an input voltage $V_{EFF}$ representing the true rotation speed of the motor, generated by a frequency/voltage converter 20.

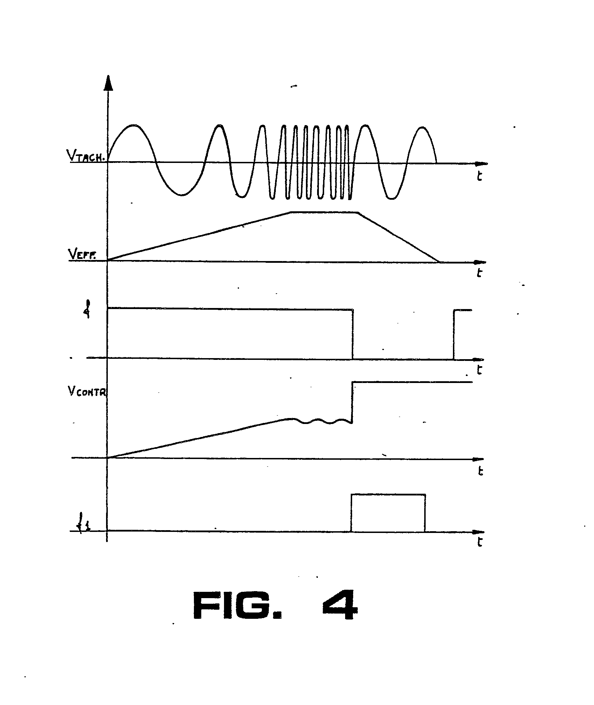

The converter 20 receives in turn a sinusoidal input signal $V_{TACH}$ generated by the speedometer dynamo 13 (figures 1 and 2), the frequency of which is proportional to the rotation speed of the motor 1 (figure 4). The generator 18 compares the two voltages $V_i$ and $V_{EFF}$ in order to send the proper control voltage signal $V_{CONTR}$. This $V_{CONTR}$ signal anyhow prevails over the voltage $V_i$ when the f signal drops to zero, thereby indicating the presence of yarn supply on the drum 6; thus, in this case, the voltage $V_{EFF}$ is compared with f (namely, with zero).

Furthermore, the signals $V_i$, $V_{EFF}$ and f are also inputs for a comparator 21 (figure 2), which is apt to send a signal $f_1$ to a circuit 22 controlling the supply of the winding 23 braking the motor 1, which supply — as will be remembered — is provided by the 25 V direct output voltage of the power supply 11.

The same 25 V direct output voltage of the power supply 11 supplies the control circuit 12, as diagrammatically indicated by the arrow $V_A$.

A brief description will now be given of the working of the electric control device according to the invention.

On starting of the yarn feeding device, the speed of the motor is down to zero and the signal $V_{EFF}$ is therefore also zero. The signal $V_i$ consequently results far higher than $V_{EFF}$. Now the signal $V_{CONTR}$ is always lower than the ramp signal (see third diagram of figure 3), so as to cause the blocks α, β and γ to produce signals $a_1$, $a_2$ and $a_3$ which energize the triacs $T_1$, $T_2$ and $T_3$. The motor 1 is thereby supplied and its speed increases. The $V_{EFF}$ also increases and approaches $V_i$. At first, the triacs remain active through the whole period of the voltage (which period is indicated by T in the last diagram of figure 3), while the motor 1 rapidly accelerates; subsequently, as $V_{EFF}$ gets closer to $V_i$, the signal $V_{CONTR}$ rises so as to intersect the ramp signal produced by the generator 16—as shown in figure 3 — and therefore acts so as to reduce the conduction angle of the triacs to the time $t_2 + t_3$ (where $t_3$ is the delay of the current I in respect of the voltage V, see first and last diagram of figure 3), and so to cause the supply of the motor 1 to take place substantially in a manner such as to keep an equilibrium between $V_i$ and $V_{EFF}$. In fact, in the comparator 17, the signal $V_{CONTR}$ and the ramp signal are compared, and the signal $a_2$ being sent (fourth diagram of figure 3) is a square wave signal which blocks the triac $T_2$ for the time $t_1$ (last diagram of figure 3).

When the winding of yarn supply on the drum 6 of the device has been completed, the signal f of the photoelectric cell 9 drops to zero — as already mentioned — and it prevails over the signal $V_i$, whereby the generator 18—receiving a signal $V_{EFF}$ corresponding to the true rotation speed of the motor, which is far higher than the signal $V_i$, now being zero — brings $V_{CONTR}$ to a value which is higher than the ramps of the signal sent by the generator 16 (third diagram of figure 3): hence, the triacs now remain inactive through the whole period T and leave the motor 1 without supply. The rotation speed of the motor thereby starts to decrease. Nonetheless, for the yarn feeding device to work correctly, it is indispensable for the deceleration of the motor, in this phase, to be fast and it is hence necessary to resort to a braking action.

This task is accomplished by the comparator 21, which also compares $V_i$ with $V_{EFF}$ and, when it detects that $V_{EFF}$ is far higher than $V_i$ (as it happens in fact when $V_i = 0$), it sends to the brake control circuit 22 a signal $f_1$ which causes the electric supply of the winding 23 braking the motor 1.

When, after part of the yarn supply has unwound, the signal f of the photoelectric cell 9 rises again, $V_{EFF}$ will again be less than $V_i$, and the initial conditions will occur again.

To make it simpler, the previous explanations have been referred to a single phase, but they could evidently be repeated, exactly in the same manner, for the other two phases.

In practice, the motor does not usually stop its rotation (it is in fact appropriate to adjust $V_i$ so that this does not happen, in order to avoid the risk of undesired changes in the tension of the yarn being fed from the device), whereby successive slackenings and accelerations normally take place, fairly close to an average value of the rotation speed depending on the selected speed value, that is on $V_i$. It should be noted that, in the event of the loom stopping, or of any other cause which may determine a prolonged braking signal, the brake control signal will anyhow be de-energized when the value of $V_{EFF}$ drops below a given threshold, in order to thus prevent supplying the winding braking the motor and any useless overheatings and consumptions.

Figure 4 contains five diagrams which illustrate the behaviour of the electric control device according to the invention, dynamically in function of the time t.

The first diagram shows the signal $V_{TACH}$ sent by the speedometer dynamo 13 in the starting phase, in steady conditions and in the braking phase of the motor 1.

The second diagram represents the output $V_{EFF}$ from the converter 20, in correspondence of the various phases illustrated by the previous diagram.

The third diagram shows how the signal f of the photoelectric cell 9 varies in the course of the operating cycle of the device represented in the previous diagrams.

The fourth diagram shows how the signal $V_{CONTR}$ sent by the generator 18 varies in the course of the same cycle.

Finally the fifth diagram of figure 4 ilustrates the law by which the brake signal $f_1$ varies in relation to the previous diagrams.

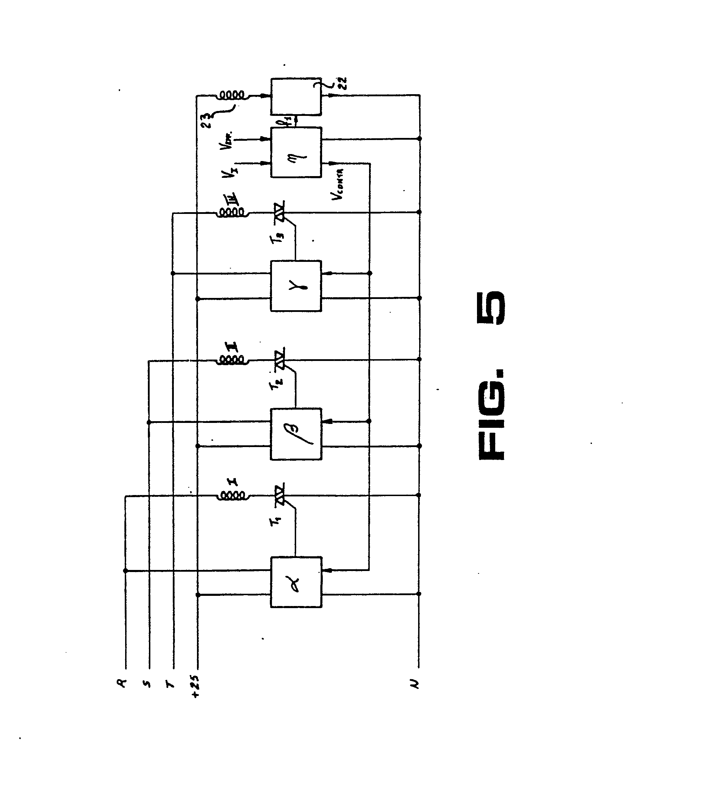

Figure 5 illustrates a different embodiment of the electric device according to the invention.

While in the heretofore described embodiment, the motor 1 is a three-phase delta-supplied motor, the embodiment of figure 5 provides for the use of a three-phase star-supplied motor. This different supply determines a different arrangement of the connections, which is hence diagrammatically illustrated.

The diagram of figure 5 again illustrates the blocks α, β and γ (herein all simplified), which are similar to those of figure 2, except for the block γ which, in the embodiment of figure 5, does not require the presence of the decoupler 19. Furthermore, the block η of figure 5 represents the generator 18 and the comparator 21 of figure 2. This embodiment has the advantage of eliminating the use of the decoupler 19 for the third phase (RS) and of a pulse transformer which was instead indispensable, always for the third phase of the previous embodiment, for energizing the triac $T_3$.

The electric control device for yarn feeding devices according to the present invention is apt to satisfy the strictest requirements of the users, and it is particularly fit for application on yarn feeders for shuttleless weaving looms with high working speed.

As seen, with said control device the rotation speed can be continuously and extensively adjusted. The acceleration and braking times are short and, above all, the speed most efficiently keeps very close to the selected values.

The control device offers remarkable advantages, as far as structural simplicity and working safety, in respect of the known devices which change the speed of the driving motor by varying the frequency of the supply voltage. Moreover, it involves lower manufacturing costs and it requires less operations of maintenance. It is hence widely preferable to the said known devices in the heretofore specified application field.

**Claims**

1. Electric device for the control of yarn feeding devices for weaving machines, of the type providing for the presence of a yarn supply wound onto a drum (6) and comprising an electric three-phase driving motor (1) supplied with AC voltage, and controlled by a first signal (f) representing the presence of the yarn supply on the drum (6), characterized in that the AC voltage supplied to the motor (1) is phase controlled by triacs ($T_1$, $T_2$, $T_3$), that said first signal (f) and two other signals representing a selected speed for the motor (1) and the true speed ($V_{EFF}$) of the motor (1) itself are compared in a circuit (18) generating a signal ($V_{CONTR}$) which must in turn be compared with three periodic ramp signals having the same phase and a period half those of the three supply voltages of the motor, in order to generate three square wave signals ($a_1$, $a_2$, $a_3$) energizing the corresponding triacs ($T_1$, $T_2$, $T_3$); and that each of the said ramp signals is generated by a ramp generating circuit (16) synchronized by signal ($V_0$) sent from a circuit (15) detecting the passage through zero of the corresponding motor supply voltage.

2. Electric device as in claim 1, characterized in that the said three signals ($V_I$, $V_{EFF}$, f) are compared also in a further electronic circuit (21) which is apt to generate asignal ($f_1$) for energizing the supply of a winding apt to brake the motor when the signal (f) indicating the presence of yarn supply takes up the zero value.

3. Electric device as in claim 2, characterized in that the supply of a braking winding (23) is no longer energized when the motor rotation speed is very low.

4. Electric device as in any of the preceding claims, characterized in that the motor is delta-supplied.

5. Electric device as in claim 4, characterized in that the circuit (15) detecting the passage through zero of the voltage of one of the phases is preceded by a decoupler (19).

6. Electric device as in any of claims 1—3, characterized in that the motor is star-supplied.

7. Electric device as in any of the preceding claims, characterized by a two-phase reversing switch (14) for reversing the rotation sense of the motor.

8. Electric device as in any of the preceding claims, forming an integrating part of a yarn feeding device, the electric supply of which can be obtained together with the supply of other similar devices from a single separate power supply (11), which comprises an alternating current output for the motor, and a low voltage direct current output for supplying the electronic circuit (12) and the winding (23) braking the motor.

**Patentansprüche**

1. Elektrische Anordnung zum Steuern einer Garnspeiseeinrichtung für Webmaschine, bei der ein um eine Trommel (6) gewickelter Garnvorrat vorhanden ist und die einen dreifadigen, mit einer Wechselspannung versorgten Antriebsmotor (1) aufweist, und die von einem ersten, das Vorhandensein eines Garnvorrats auf der Trommel (6) angebenden Signal (f) gesteuert wird, dadurch gekennzeichnet, daß die Spannungsversorgung des Motors (1) durch Triacs ($T_1$, $T_2$, $T_3$) phasengesteuert wird, daß das erste Signal (f) und zwei andere eine gewählte Geschwindigkeit des Motors (1) und die wahre Geschwindigkeit ($V_{EFF}$) des motors (1) selbst darstellenden Signale in einem Schaltkreis (18) verglichen werden, der ein Signal ($V_{CONTR}$) erzeugt, das wiederum mit drei periodischen Rampensignalen verglichen werden muß, das dieselbe Phase hat und deren Periode der halben Periode der der drei Versorgungsspannungen des Motors entspricht, um drei Rechteckwellensignale ($a_1$, $a_2$, $a_3$) zu erzeugen, die die entsprechenden Triacs ($T_1$, $T_2$, $T_3$) betreiben; und daß jedes der Rampensignale von einem Rampenerzeugungsschaltkreis (16) erzeugt wird, der durch ein Signal ($V_0$) synchronisiert wird, das

von einem Schaltkreis (15) stammt, der den Nulldurchgang der entsprechenden Motorversorgungsspannung angibt.

2. Elektrische Anordnung nach Anspruch 1, dadurch gekennzeichnet, daß die drei Signale ($V_I$, $V_{EFF}$, f) in einem weiteren elektronischen Schaltkreis (21) verglichen werden, der zur Erzeugung eines Signals ($f_1$) eingerichtet ist, um eine zum Bremsen des Motors eingerichtete Windung des Motors mit Spannung zu versorgen, wenn daß das Vorhandensein von Garn angebende Signal (f) einen Nullwert aufweist.

3. Elektronische Anordnung nach Anspruch 2, dadurch gekennzeichnet, daß die Spannungsversorgung der Bremswindung (23) nicht vorhanden ist, wenn die Drehgeschwindigkeit des Motors sehr gering ist.

4. Elektrische Anordnung nach einem der vorangehenden Ansprüche, dadurch gekennzeichnet, daß der Motor im Dreieck geschaltet ist.

5. Elektrische Anordnung nach Anspruch 4, dadurch gekennzeichnet, daß dem den Nulldurchgang der Spannung einer der drei Phasen angebenden Schaltkreis ein Dekoppler (19) vorangeht.

6. Elektrische Anordnung nach einem der Ansprüche 1 bis 3, dadurch gekennzeichnet, daß der Motor sterngeschaltet ist.

7. Elektrische Anordnung nach einem der vorangehenden Ansprüche, gekennzeichnet durch einen Zweiphasenumkehrschalter (14) zum Umkehren der Drehrichtung des Motors.

8. Elektrische Anordnung nach einem der vorangehenden Ansprüche, die einen Bestandteil einer Garnspeiseeinrichtung bildet, wobei deren elektrische Versorgung zusammen mit der Versorgung ähnlicher Einheiten von einer einzigen gesonderten Spannungsquelle (11) übernommen wird, die einen Wechselstromausgang für den Motor aufweist und einen Niedergleichspannungsausgang zur Versorgung des elektrischen Schaltkreises (12) und der Bremswindung (23) des Motors.

**Revendications**

1. Dispositif électrique pour la commande des dispositifs d'alimentation en fil pour des métiers à tisser du type prévoyant la présence d'une amenée de fil bobinée sur un tambour (6) et comportant un moteur électrique d'entraînement triphasé (1) alimenté avec une tension alternative et commandé par un premier signal (f) représentant la présence de l'amenée de fil sur le tambour (6), caractérisé en ce que la tension alternative envoyée au moteur (1) est comandée en phase par des thyristors bidirectionnels ou triacs ($T_1$, $T_2$, $T_3$); en ce que ledit premier signal (f) et deux autres signaux représentant une vitesse choisie pour le moteur (1) et la vitesse vraie ($V_{EFF}$) du moteur (1) elle-même sont comparés dans un circuit (18) qui génère un signal ($V_{CONTR}$) qui doit à son tour être comparé avec trois signaux périodiques en dents de scie ou signaux de rampe présentant la même phase et une période moitié de celle des trois tensions d'alimentation du moteur, de façon à générer trois signaux à onde carrée ($a_1$, $a_2$, $a_3$) pour mettre sous tension les triacs correspondants ($T_1$, $T_2$, $T_3$); et en ce que chacun des dits signaux de rampe est généré par un circuit (16) de génération de signaux de rampe synchonisé par un signal ($V_0$) émis par un circuit (15) qui détecte le passage au zéro de la tension d'alimentation correspondante du moteur.

2. Dispositif électrique selon la revendication 1, caractérisé en ce que lesdits trois signaux ($V_I$, $V_{EFF}$, f) sont également comparés dans un autre circuit électronique (21) capable de générer un signal ($f_1$) pour mettre sous tension un bobinage capable de freiner le moteur lorsque le signal (f) indiquant la présence de l'amenée de fil prend la valeur zéro.

3. Dispositif électrique selon la revendication 2, caractérisé en ce que le bobinage de frein (23) n'est plus mis sous tension lorsque la vitesse de rotation du moteur est très faible.

4. Dispositif électrique selon l'une quelconque des revendications précédentes, caractérisé en ce que le moteur est alimenté en triangle.

5. Dispositif électrique selon la revendication 4, caractérisé en ce que le circuit (15) de détection du passage par zéro de la tension de l'une des phases est précédé d'un découpleur (19).

6. Dispositif électrique selon l'une quelconque des revendications 1 à 3, caractérisé en ce que le moteur est alimenté en étoile.

7. Dispositif électrique selon l'une quelconque des revendications précédentes, caractérisé par un inverseur biphasé (14) pour inverser le sens de rotation du moteur.

8. Dispositif électrique selon l'une quelconque des revendications précédentes, formant partie intégrante d'un dispositif d'alimentation en fil et dont l'alimentation électrique peut être obtenue, en même temps que l'alimentation d'autres dispositifs semblables, à partir d'une unique alimentation puissance distincte (11), que fournit une tension alternative de sortie pour le moteur et une tension continue, basse tension, de sortie pour alimenter le circuit électronique (12) et le bobinage (23) de freinage du moteur.

FIG. 1

FIG. 2

FIG. 3

**FIG. 4**

FIG. 5